(19) Europäisches Patentamt
European Patent Office
Office européen des brevets

(11) Publication number: **0 254 254**
**A2**

(12) # EUROPEAN PATENT APPLICATION

(21) Application number: **87110484.0**

(22) Date of filing: **20.07.87**

(51) Int. Cl.⁴: **G11B 27/02**, G11B 31/00, G11B 15/44

(30) Priority: **25.07.86 JP 175913/86**

(43) Date of publication of application: **27.01.88 Bulletin 88/04**

(84) Designated Contracting States: **DE FR GB**

(71) Applicant: **Matsushita Electric Industrial Co., Ltd.**
**1006, Oaza Kadoma**
**Kadoma-shi Osaka-fu, 571(JP)**

(72) Inventor: **Yamada, Jiro**
**1-4, Takayanagi 5-chome**
**Neyagawa City, 572(JP)**

(74) Representative: **Patentanwälte Kirschner & Grosse**
**Forstenrieder Allee 59**
**D-8000 München 71(DE)**

(54) **Compact disc reproducing apparatus.**

(57) In order to record an information from a compact disc apparatus to an automatic reversing cassette tape recorder without any loss of the information, the compact disc player (2) and the cassette tape recorder (13) are synchronizedly started by a reproducing start control means (1) which makes the compact disc player (2) and when the cassette tape comes to one end a tape end detection means (10) issues a pulse which makes the compact disc player pause for 1--2 sec. time period which is longer than the time period for reversing the cassette tape recorder, and thereby the compact disc player (2) start reproduction of information after reverse direction start of the cassette tape recorder (13), to prevent a loss of information reproduced by the compact disc player (2) during the tape reversing.

EP 0 254 254 A2

# Compact disc reproducing apparatus

## FIELD OF THE INVENTION AND RELATED ART STATEMENT

### 1. FIELD OF THE INVENTION

The present invention relates to an information reproducing and recording apparatus, and more particularly to that which can record information from an information reproducing apparatus to an information recording apparatus without any omission of the information at reversing of driving direction of the recording medium of the recording apparatus.

### 2. DESCRIPTION OF THE RELATED ART

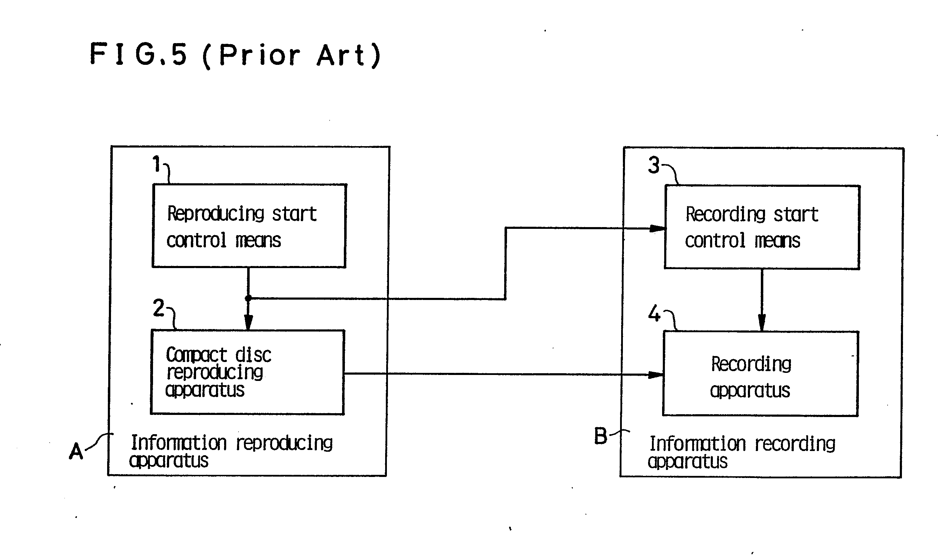

The information reproducing and recording apparatus of the prior art has been configured as shown in FIG. 5. In an information reproducing apparatus A such as a compact disc player, a disc reproducing apparatus 2 and a reproducing start control means 1 for controlling the starting of the disc reproducing apparatus 2 are provided; and in an information recording apparatus B, a recording apparatus 4 and a recording start control means 3 for controlling the starting of the recording apparatus 4 are provided; and the information reproducing apparatus A and the information recording apparatus B are connected such that an output signal of the disc reproducing apparatus 2 is given to the recording apparatus 4, and a control signal from the reproducing start control means 1 is given to the recording start control means 3.

The operation of the above-mentioned conventional example is as follows. First, the user handles the reproducing start control means 1 to make the information reproducing apparatus 2 start a reproducing of the disc reproducing apparatus 2, and at the same time the signal from the reproducing start control means 1 is given to the recording start control means 3, thereby to start the recording apparatus 4 such as a cassette tape recorder. Then the information signal reproduced by the disc reproducing apparatus 2 of the information reproducing apparatus A is given to the recording apparatus 4 of the information recording apparatus B, and the information is recorded in the cassette tape.

The above-mentioned conventional combination of the information reproducing apparatus A and the information recording apparatus B have the following problem. When one side or one track of the cassette tape of the recording apparatus 4 comes to an end during the process of the reproducing-and-recording, the recording is stopped by stopping of the tape running. But the information reproduction by the disc reproducing apparatus 2 is made continuously even after the stop of the recording function of the recording apparatus 4. In case the recording apparatus 4 is an automatic reversing cassette tape recorder, wherein at coming to the end of the cassette tape the running direction of the cassette tape and connection of the recording heads are automatically reversed thereby to start a recording by reverse direction tape running, when the cassette tape comes to one end the recording apparatus 4 requires a predetermined time period, for instance 1 to 2 seconds to start the reverse direction recording. And during such time period, the recording is not carried out, but the information reproducing by the disc reproducing apparatus 2 is continuously made regardless of such non-recording time. Accordingly the recorded information on the cassette tape becomes defective by failing to contain full information reproduced by the information reproducing apparatus A.

## OBJECT AND SUMMARY OF THE INVENTION

The object of the invention is to provide an improved information reproducing and recording apparatus, wherein information reproduced by an information reproducing apparatus can be fully recorded without loss of information for a time period of reversing the driving of the recording medium at one end thereof.

In order to achieve the above-mentioned object, the information reproducing and recording apparatus in accordance with the present invention comprises:

a disc reproducing apparatus for reproducing information recorded on a disc,

an information recording apparatus for recording information, which is reproduced from the disc reproducing apparatus, on a recording medium (cassette tape),

recording start control means for making drivings of the disc reproducing apparatus and the information recording apparatus start synchronizedly,

end detection means for detecting that the recording medium comes to one end,

reversing means for reversing direction of driving of the information recording apparatus,

pause control means for controlling to pause the reproducing of information from the disc reproducing apparatus at reception of an output of the end detection means, to make the disc reproducing apparatus restart its operation.

According to the above-mentioned configuration of the apparatus, when one side of the recording medium or one track of the recording medium comes to the end during the pendency of the reproducing of the information in the information reproducing apparatus, the disc player or the like information reproducing apparatus is stopped for a predetermined time to wait for restarting of the recording apparatus in a recording on another side or another track of the recording medium, thereby to eliminate the hitherto existed omission or loss of the reproduced information, thereby enabling complete recording of the information from the compact disc to the recording medium.

While the novel features of the invention are set forth particularly in the appended claims, the invention, both as to organization and content, will be better understood and appreciated, along with other objects and features thereof, from the following detailed description taken in conjunction with the drawings.

## BRIEF DESCRIPTION OF THE DRAWING

FIG. 1 is a circuit block diagram of a preferred embodiment of the information reproducing and recording apparatus in accordance with a present invention.

FIG. 2 is a front view showing a compact disc player as the information reproducing apparatus and a double cassette tape recorder as the information recording apparatus.

FIG. 3 and FIG. 4 are timing charts showing the operations of the information reproducing and recording apparatus embodying the present invention.

FIG. 5 is the information reproducing and recording apparatus of the prior art.

## DESCRIPTION OF THE PREFERRED EMBODIMENT

Hereafter a preferred embodiment of the present invention is elucidated with reference to FIG. 1, FIG. 2 and FIG. 3. As shown in FIG. 1, an information reproducing apparatus 6 comprises a compact disc reproducing apparatus 2 having a light pickup 3. The information reproducing apparatus 6 also contains edge detection means 5 for detecting edges of an input pulse thereto and outputting timing signals to reproducing start control means 1 and pause control means 4. The reproducing start control means 1 outputs control signals to the compact disc reproducing apparatus 2 and recording start control means 7 in an information recording apparatus 13, for making an interlocked startings of them in a manner that start of the information recording apparatus 13 is prior to start of the information reproducing apparatus 6. The pause control means 4 outputs signal for making a pause to the compact disc reproducing apparatus 2. On the other hand, the information recording apparatus 13 comprises a recording head 9, tape driving means 8 and the recording start control means 7 for making the recording head 9 and the tape driving means 8 to reverse driving direction at reception of the start control signal from the reproducing start control means 1. The information recording apparatus 13 further comprises tape end detection means 10 which issues a tape end signal at detection of the tape end to driving reversing means 11, which makes reversing of driving of the tape driving means 8 and the recording head 9. The tape end detection means 10 further issues a signal to a pulse signal generation means 12, which after a predetermined time period issues a pulse signal to the edge detection means 5 in the information reproducing apparatus 6. Tape and detection means 12 is for instance reflection type photocoupler or the like sensor means.

FIG. 2 is a front view showing front panels of the information reproducing apparatus 6 which is a CD player and the information recording apparatus 13 which is an automatic reversing cassette tape recorder. The information reproducing apparatus 6 has a function key 16 which can serve as a key of the reproducing start control means 1 and also as the pause control means 4. That is, when the information reproducing apparatus 6 is not yet started for the information reproducing, the apparatus is started by pushing the key 16, by a function of known relay switch (not shown), thus functioning as the reproducing start control means 1. When the information reproducing apparatus 6 is in a reproducing state, a push of the key 16 makes a function of the pause control means 4. Further, a key 17 on the information recording apparatus 13 carries out a function of the recording start control means 7. The cable 18 contains connections from the reproducing start control means 1 to the recording start control means 7, from the light pickup 3 to the recording head 9 and from the pulse signal generation means 12 to the edge direction means 5.

The operation of the above-mentioned embodiment is as follows: First a compact disc or an optical disc having a suitable information thereon is installed in the compact disc reproducing apparatus 2, and a cassette tape is installed in the information recording apparatus 13. Then, by handling the key 16, a start control signal is issued from the reproducing start control means 1 to the compact disc reproducing apparatus 2. Then, the compact disc reproducing apparatus 2 start reproducing of the information stored on the compact disc by the light pickup 3, after 0.4--0.5 sec. from the reception of the start control signal. Simultaneously with reception of the start control signal by the compact disc reproducing apparatus 2, the start control signal is given to the recording start control means 7. The recording start control means 7 makes the head 9 and the tape driving means 8 start. Thus, start of recording state on the cassette tape in the information recording apparatus is set 0.4--0.5 sec. prior to the start of information leading by the light pickup 3. Accordingly, the information which is picked up by the light pickup 3 from the optical disc is recorded to the cassette tape without fear of omitting its starting part, as a result of the above-mentioned 0.4--0.5 sec. delaying of the start of the compact disc reproducing apparatus.

When the cassette tape comes to one end, the tape end detection means 10 detects the end of the cassette tape, and issues the end detection signal to the driving reversing means 11. At reception of the tape end detection signal from the tape end detection means 10, the pulse signal generation means 12 issues a fall pulse to the edge detection means 5. The edge detection means 5 issues a signal to the pause control means 4, which makes the compact disc reproducing apparatus 2 pause for a predetermined time period. At that time, the light pickup 3 maybe stopped at that position or may go back by a predetermined number of tracks and stop there. The information reproducing apparatus 6 thus pauses its information reproducing when the cassette tape of the information recording apparatus comes to the end.

On the other hand, the driving reversing means 11 which receives the end detection signal from the tape end detection means 10 makes the tape driving means 8 and the recording head 9 reverse there state of driving to the opposite one, or to another track or another cassette tape. Since the time period necessary for reversing the state of head 9 and the direction of running of the tape by the tape driving means 8 is several hundred milli to one thousand milli seconds, the pulse signal generation means 12 is designed, so as to issue a rise pulse signal to the edge detection means 5 after about 1.5 seconds from the reception of the end detection signal from the tape end detection means 10. Upon reception of the rise pulse signal from the pulse signal generation means 12, the edge detection means 5 issues a restart signal for making the reproducing start control means 1, to issue a start signal in order to restart the compact disc reproducing apparatus 2 which has been in stop state. Then the compact disc reproducing apparatus 2 turns to the reproducing state after 1.5 second from the generation of the rise pulse signal. Though the start control signal, which is issued from the start control means 1, is given also to the recording start control means 7, the information recording apparatus 13 which is already in the recording state neglects the start control signal and continue the recording state.

After reversing (or shifting) the recording state of the information recording apparatus 13 by reversing (or shifting) the states (or track) of the recording head 9 and the state of the tape driving means 8 in the reversed (or shifted) running state, the recording of the information on the compact disc in the information reproducing apparatus 6 to the cassette tape in the information recording apparatus 13 is restored and carried out.

As has been described in the above, since the compact disc reproducing apparatus 2 is made to the recording state only after turning to the recording state of the information recording apparatus 13, the information recorded on the cassette tape is not omitted even at the part of the information where the tape driving of the information recording apparatus 13 is reversed. Therefore, a complete recording of the information from the compact disc to the cassette tape is accomplished, by detection of the tape end and subsequently making the information reproducing apparatus 6 pause for a predetermined time which is longer than the time period necessary for reversing the driving direction of the cassette tape.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. An information reproducing and recording apparatus comprising
a disc reproducing apparatus for reproducing information recorded on a disc,
an information recording apparatus for recording information, which is reproduced from said disc reproducing apparatus, on a recording medium (cassette tape),
recording start control means for making drivings of said disc reproducing apparatus and said information recording apparatus start synchronizedly,
end detection means for detecting that said recording medium comes to one end,
reversing means for reversing direction of driving of said information recording apparatus,
pause control means for controlling to pause said reproducing of information from said disc reproducing apparatus at reception of an output of said end detection means, to make said disc reproducing apparatus restart its operation.

2. An information reproducing and recording apparatus comprising
a compact disc player for reproducing information recorded on a disc,
a reverse drivable tape recorder for recording information which is reproduced from said compact disc player, on a recording tape (cassette tape),
recording start control means for making drivings of said compact disc player and said reverse drivable tape recorder start synchronizedly,
end detection means for detecting that said recording tape comes to one end,
reversing means for reversing direction of driving of said reverse drivable tape recorder,
pause control means for controlling to pause said reproducing of information from said compact disc player for a predetermined pause time period at reception of an output of said end detection means, to make said compact disc player and said reverse drivable tape recorder restart their operation at completion of said pause time period.

FIG.1

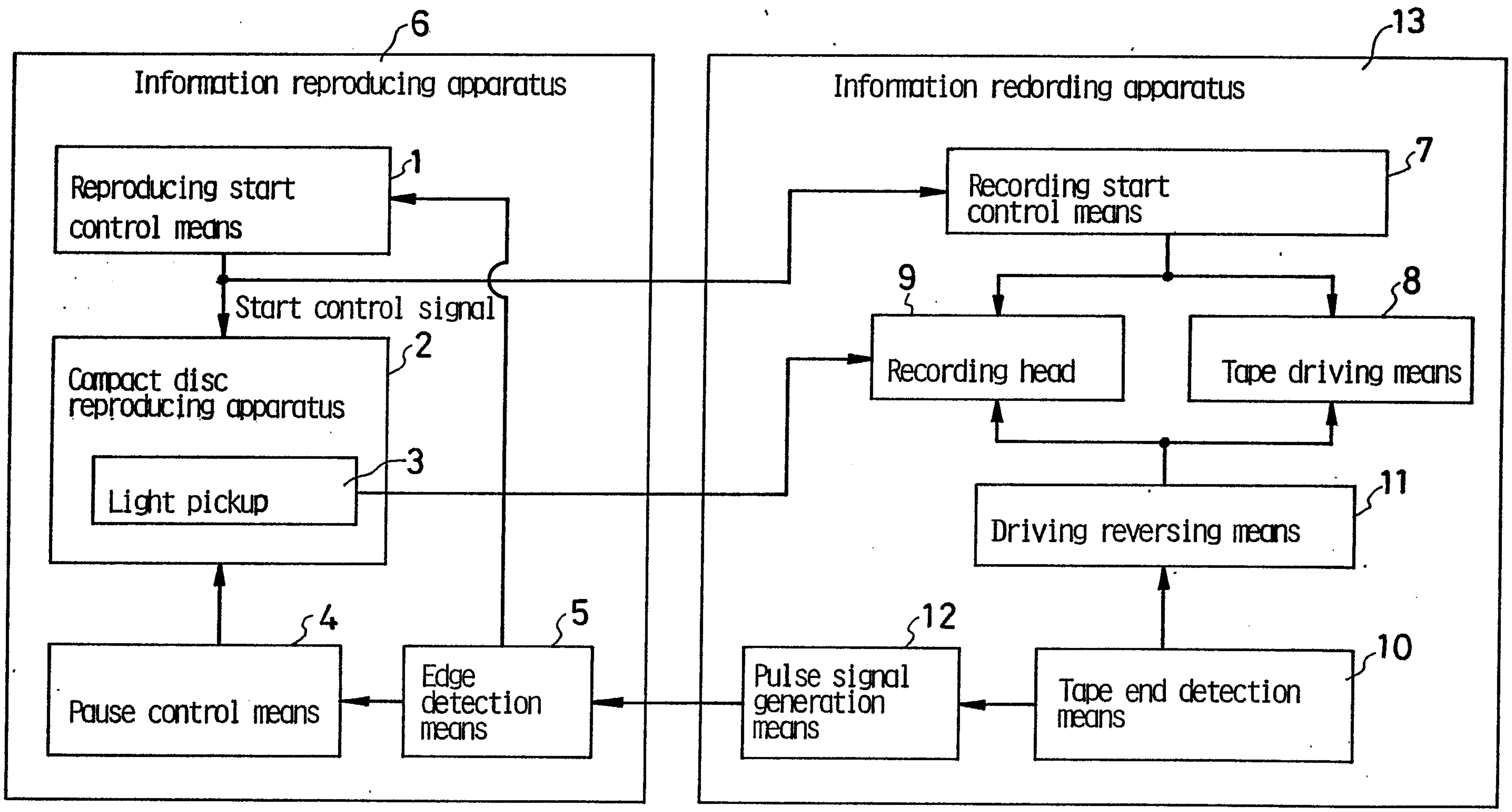
6
Information reproducing apparatus
1
Reproducing start control means
Start control signal
2
Compact disc reproducing apparatus
3
Light pickup
4
Pause control means
5
Edge detection means
13
Information redording apparatus
7
Recording start control means
9
Recording head
8
Tape driving means
11
Driving reversing means
12
Pulse signal generation means
10
Tape end detection means

FIG. 2

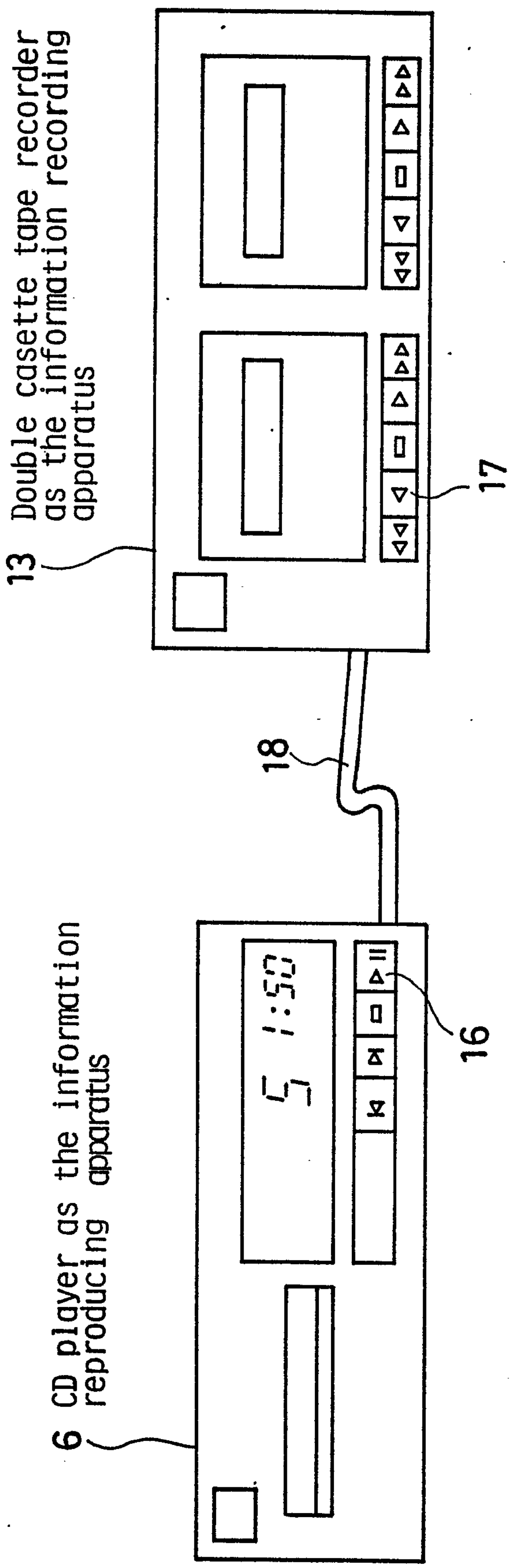
Double casette tape recorder as the information recording apparatus
13
17
18
CD player as the information reproducing apparatus
6
16
5 1:50

FIG.3

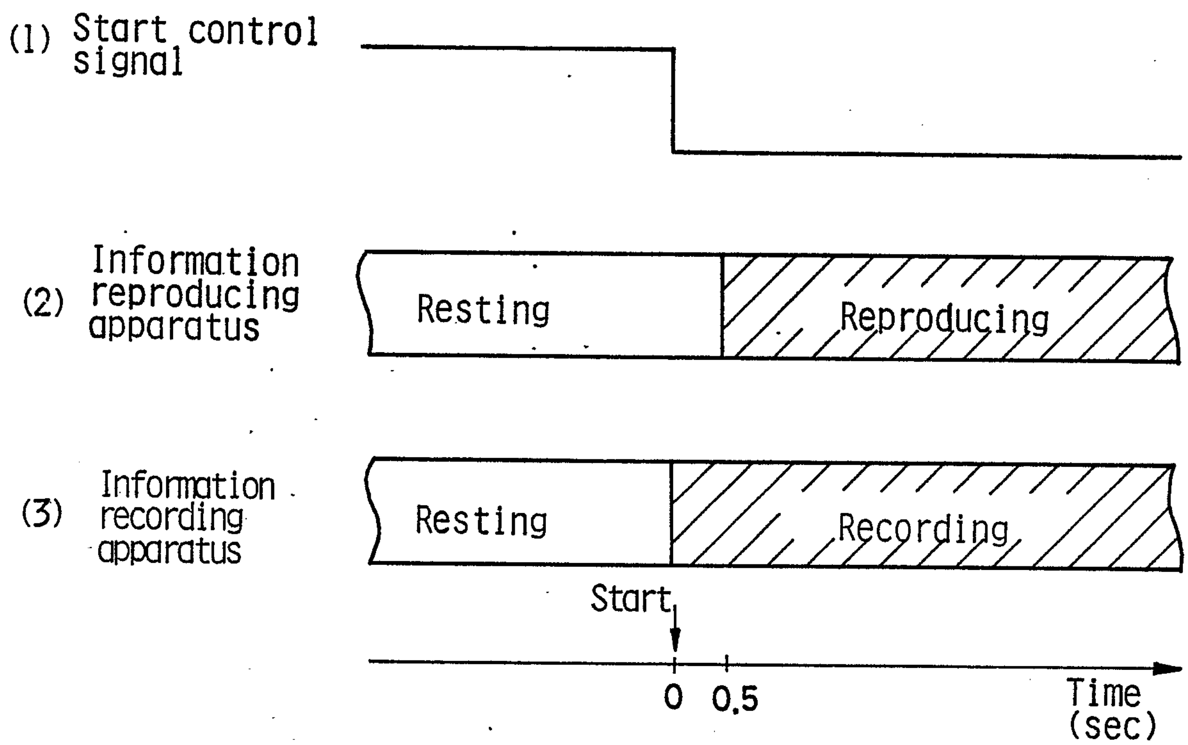
(1) Start control signal
(2) Information reproducing apparatus
Resting
Reproducing
(3) Information recording apparatus
Resting
Recording
Start
0
0.5
Time (sec)

FIG.4

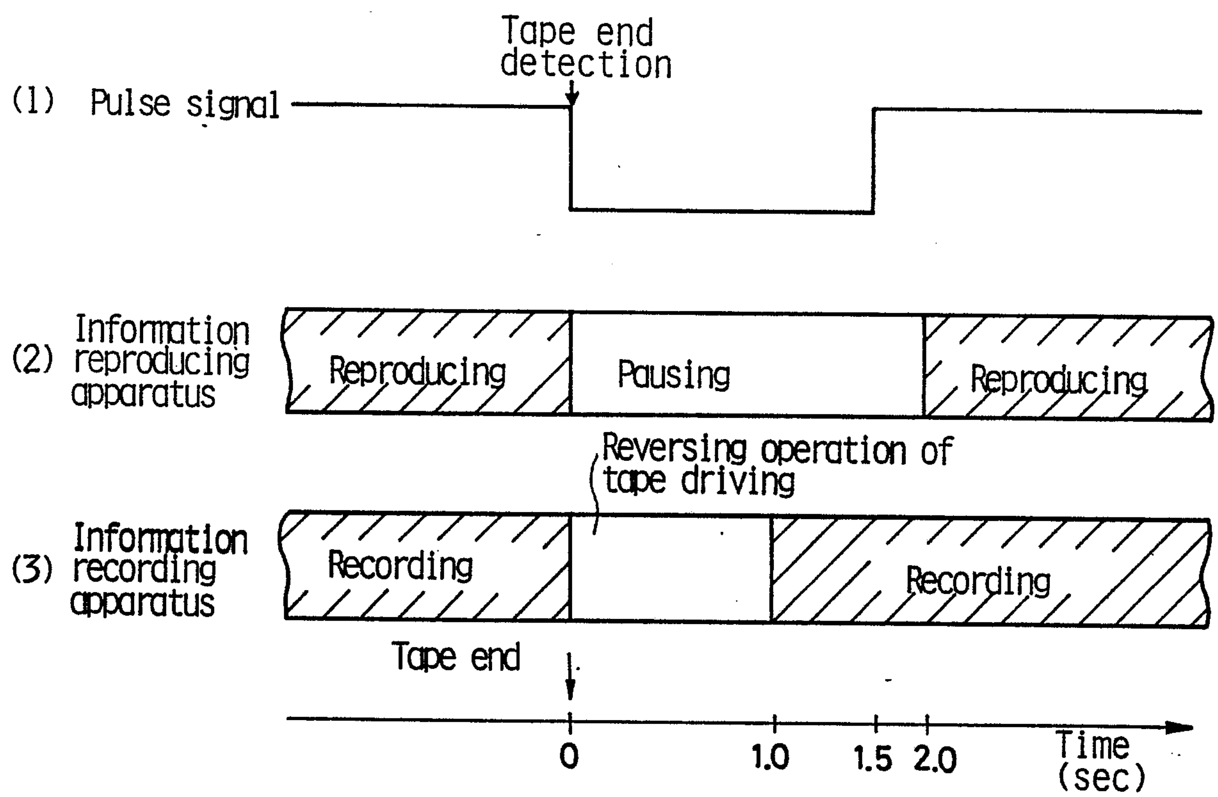
Tape end detection
(1) Pulse signal
(2) Information reproducing apparatus
Reproducing
Pausing
Reproducing
Reversing operation of tape driving
(3) Information recording apparatus
Recording
Recording
Tape end
0
1.0
1.5
2.0
Time (sec)

FIG.5 (Prior Art)